# EUROPÄISCHE PATENTSCHRIFT

(11) **EP 1 045 217 B1**
(45) Veröffentlichungstag und Bekanntmachung des Hinweises auf die Patenterteilung: **26.03.2003**
(21) Anmeldenummer: 99107601.9
(22) Anmeldetag: 16.04.1999
(51) Int. Cl.: F28D 1/04, F01P 3/18

(54) **Kühlanlage**
Cooling system
Système de refroidissement

(43) Veröffentlichungstag der Anmeldung: 18.10.2000
(73) Patentinhaber: Modine Manufacturing Company, Racine, Wisconsin 53403-2552 (US)
(72) Erfinder: Zobel, Werner, 71052 Böblingen (DE); Stephan, Bernhard, 70794 Filderstadt (DE); Ehlers, Michael, 72202 Nagold (DE); Vetter, Frank, Dr., 70794 Filderstadt (DE); Soldner, Jörg, Dr., 71139 Ehningen (DE)
(74) Vertreter: Wolter, Klaus-Dietrich

(56) Entgegenhaltungen:
- DE-A- 3 118 539
- DE-A- 19 724 728
- DE-U- 29 504 867
- GB-A- 898 822
- GB-A- 2 065 860
- US-A- 4 202 296

## Beschreibung

Die Erfindung betrifft eine Kühlanlage für Lastkraftwagen, mit mehreren einzelnen, jeweils ein Kühlnetz und zwei Seitenteile aufweisenden Kühlern, wie beispielsweise Ladeluftkühler und Wasserkühler, die kastenförmig derart zusammengefügt sind, daß jeder Kantenbereich der kastenförmigen Anordnung durch einen Sammelkasten eines Kühlers und einen Sammelkasten des nächsten Kühlers gebildet ist, wobei die Kühlanlage einen Radialventilator innerhalb der kastenförmigen Anordnung aufweist, der Frischluft über eine Ansaugöffnung in der Frontplatte ansaugt und als Kühlluft durch die Kühler der kastenförmigen Anordnung hindurchbläst, die durch eine Rückwand verschlossen ist.
Man kann grob drei Bauarten von Kühlanlagen unterscheiden. Zunächst sind die sogenannten axialen Kühlanlagen zu nennen, die, in Luftströmungsrichtung gesehen, mehrere Kühler hintereinanderliegend aufweisen, die von einer Ventilatorhaube umschlossen sind, in deren Zentrum gewöhnlich ein Axialventilator angeordnet ist, der die Kühlluft durch das Kühlnetz der Kühler saugt oder drückt. Diese Kühlanlagen sind überwiegend im Fahrzeugbereich anzutreffen. Sie sind leistungsmäßig verbesserungsbedürftig und wegen ihres großen Bauraums gegenüber den Kühlanlagen aus dem Oberbegriff nachteilig. Ferner weisen Axialventilatoren einen höheren Geräuschpegel auf und besitzen bei gleicher Leistungsaufnahme einen geringeren Luftvolumenstrom als Radialventilatoren.
Außerdem sind Kühlanlagen mit einem ringförmig geformten Kühler bekannt, in dessen Ringraum ein Radialventilator angeordnet ist. Diese Bauart besitzt leistungsmäßige Vorteile, die Herstellung der Kühlanlagen ist jedoch aufwendig. Ferner lassen sich bei dieser Bauart verschiedene getrennte Kühlkreisläufe, die bei Fahrzeugen vorhanden sein müssen, nur schwierig oder gar nicht in einer einzigen Kühlanlage zusammenfassen. Ein dieser Bauart ähnlicher Kühler geht aus GB 898 822 hervor. Es handelt sich dabei um einen einzigen Kühler, der aber nicht in Ringform sondern in Kastenform oder in Form eines Sechsecks ausgebildet ist. Jedoch handelt es sich dort nicht um mehrere einzelne Kühler für verschiedene Betriebsstoffe eines Lastkraftwagens, die zusammengefügt sind. Deshalb tritt bei diesem Kühler nicht das Problem auf, dass Leistungsverluste durch ungenutzte Kühlluft entstehen. Ferner besitzt der bekannte Kühler keinen Radialventilator in seinem Inneren, sondern einen außerhalb des Inneren angeordneten Axialventilator.

Ein weiterer aus GB 2 065 860 bekannter Ringkühler besteht aus mehrerer Kühlern, die unlösbar zu einem ringartigen Gebilde zusammengefügt sind. Die Kühler sind zur Kühlung verschiedener Betriebsstoffe vorgesehen. Welche Art des Ventilators vorgesehen ist und wie er angeordnet sein muß, ist dort nicht gezeigt worden. Es ist außerordentlich kompliziert einen Kühler solcher Bauart mit geringen Kosten so auszulegen, dass den verschiedenen Kühlungsbedürfnissen für den Betrieb des Lastkraftwagens entsprochen werden kann. Wenn z. B. eine neue Generation von Lastkraftwagen entwickelt wird, muß ein komplett anderer Kühler vorgesehen werden, der den neuen Bedürfnissen entspricht. Es ist bei dieser Bauart schwierig, Teile des alten Kühlers zu übernehmen. Die Herstellung solcher Kühlanlagen ist sehr aufwendig.

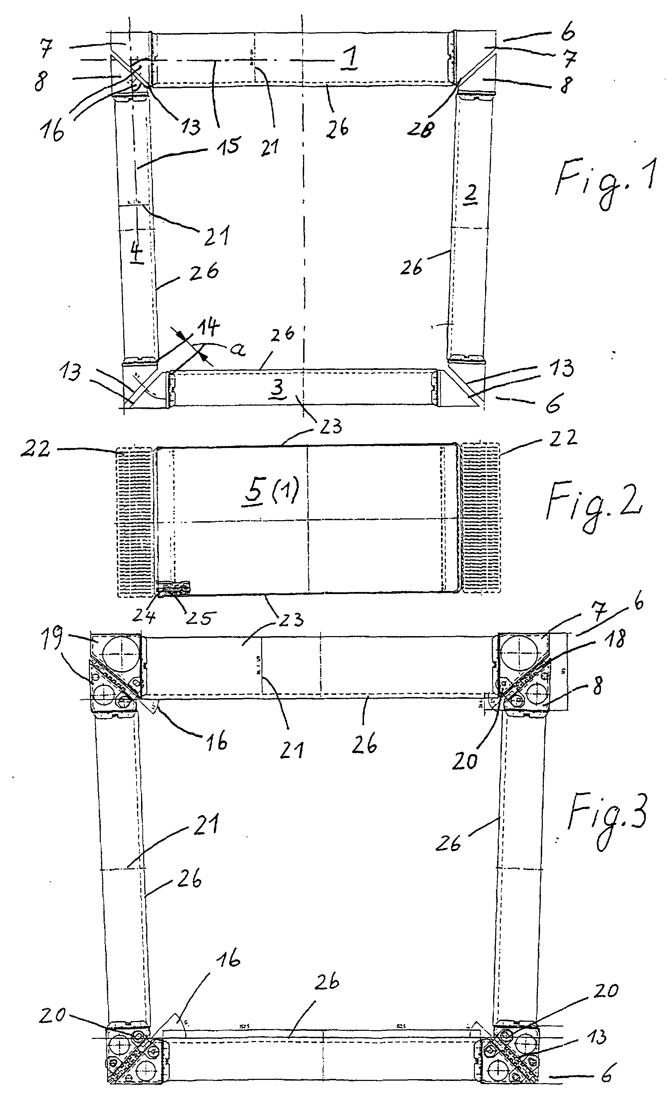

Die dritte Bauart ist diejenige aus dem Oberbegriff, die aus der DE 197 24 728 bekannt ist. In diesem Dokument beschäftigt man sich damit, die Leistungsverluste des Radialventilators im Bereich der Ansaugöffnung zu senken. Die oben genannten Merkmale gehen aus der Fig. 1 des Dokumentes hervor. Insbesondere diese Figur zeigt, daß in den Kantenbereichen, die von den Sammelkästen jeweils zweier Kühler gebildet werden, Leistungsverluste auftreten, weil dort Kühlluft ungenutzt abströmen kann. Darüber hinaus ist die der Kühlung dienende Nutzfläche (Kühlnetzfläche) nicht optimiert. Deshalb ist die bekannte Kühlanlage hinsichtlich ihrer Kompaktheit und Leistungsfähigkeit weiter verbesserungsbedürftig.

Die Aufgabe der Erfindung besteht darin, bei Kühlanlagen der letztgenannten Bauart, die in den Kantenbereichen auftretenden Leistungsverluste zu minimieren, die Kompaktheit solcher Kühlanlagen weiter anzuheben und sie mit wenig Aufwand an veränderte Kühlanforderungen anzupassen.
Diese Aufgabe wird erfindungsgemäß durch die kennzeichnenden Merkmale im Anspruch 1 gelöst.
Es ist vorgesehen, daß die Sammelkästen der Kühler mit korrelierenden Flächen ausgebildet sind, die einen weitgehend luftdichten Abschluß zwischen den Flächen im Kantenbereich zulassen. Die korrelierenden Flächen sind so ausgebildet, daß bei deren Zusammenfügen die innenliegenden Kanten der Kühlnetze der zugehörigen, den Kantenbereich der Kühlanlage bildenden Kühler in ihrem Abstand zueinander minimiert sind. Das heißt, der Abstand kann den Wert "Null" aufweisen, so daß sich die Kühlnetze berühren oder er kann nur wenige Millimeter betragen. Je nach Baugröße der Kühlanlage beträgt der Abstand bei bevorzugten Ausführungsbeispielen nicht mehr als 30 mm. Kühlnetze sind dem Fachmann bekannt. Sie bestehen gewöhnlich aus einer Vielzahl flacher Rohre, die die beiden gegenüberliegenden Sammelkästen eines Kühlers verbinden. Durch diese Rohre fließt ein wärmeaustauschendes Medium, z. B. beim Radiator eines Kraftfahrzeuges die Kühlflüssigkeit des Motors. Zwischen den Flachrohren erstrecken sich den Wärmeaustausch fördernde Elemente, oftmals Wellrippen oder dergleichen, durch die die Kühlluft hindurchströmt. In vielen Fällen ist dieses Kühlnetz, Rohre und Wellrippen, durch Löten kompakt verbunden. Im Kühlnetz findet hauptsächlich der Wärmeaustausch statt.

Im einfachsten Fall sind die korrelierenden Flächen eben, so daß bei deren Zusammenfügen die Luftdichtheit gewährleistet ist. Eine Verbindung zwischen den Flächen kann erfolgen, ist aber keine notwendige Bedingung. Die Flächen können auch eine von der Ebene abweichende Gestaltung aufweisen, sofern beide Flächen zueinander korrelieren und dabei die Luftdichtheit gewährleisten. Beispielsweise könnten Verbindungsorgane, wie Rastelemente oder dgl. an diesen Flächen angeordnet sein, die ineinandergreifen und die Kühler zusammenhalten. Ferner können zwischen den Flächen separate Verschlußorgane eingefügt sein. Darüber hinaus können sich in einem anderen Ausführungsbeispiel Verbindungsorgane an den anderen Wänden der Sammelkästen, an ausgewählten Stellen, befinden, die außen - am Umfang - der korrelierenden Flächen über dieselben reichen und die Verbindung der beiden Sammelkästen im Kantenbereich zulassen.

Selbstverständlich kann die Luftdichtheit auch ohne Verbindung zwischen diesen Flächen - nur durch Aneinanderliegen - hergestellt werden, wie oben bereits ausgeführt wurde, wodurch eine bevorzugte Ausführungsform gekennzeichnet ist.

Die erfindungsgemäße Kühlanlage gestattet, Kühler mit verschiedenen Tiefen des Kühlnetzes vorzusehen, ohne daß dabei die Effizienz des Wärmeaustausches wesentlich beeinträchtigt wird. Dadurch läßt sich die erfindungsgemäße Kühlanlage ganz einfach an den erforderlichen Kühlleistungsbedarf anpassen. Dem für die Projektierung und Auslegung von Kühlanlagen zuständigen Fachmann wurden durch die Erfindung weitreichende Varianten und Möglichkeiten der Gestaltung solcher Anlagen zur Verfügung gestellt. Bei axialen Kühlanlagen sind diese Maßnahmen mit wesentlichen Nachteilen verbunden, weil die von der Kühlluft durchströmten Kühler hintereinander angeordnet sind und nacheinander durchströmt werden, wobei sich die Kühlluft erwärmt und dadurch die Effizienz des Wärmeaustausches verschlechtert.

Durch die Erfindung wird verhindert, daß in den Kantenbereichen Kühlluft ungenutzt entweicht. Die Kühlluft wird gezwungen, den Weg durch die Kühlnetze hindurch zu nehmen. Ferner wird dadurch, daß sich die einzelnen Kühler mit ihren Kühlnetzen in den Kantenbereichen nahezu berühren, die zur Kühlung nutzbare Fläche wesentlich vergrößert. Das bedeutet, daß bei gleicher Kühlleistung die Kühlanlage kompakter, d.h. raumsparender, ausgebildet werden kann.
Weitere Merkmale ergeben sich aus den Patentansprüchen. Ferner gehen Merkmale und Wirkungen aus der nachfolgenden Beschreibung von Ausführungsbeispielen hervor.
Es zeigen:
- Fig. 1: Vorderansicht einer Kühlanlage in einer bevorzugten Ausführungsform ohne Front-und Rückwand;
- Fig. 2: Das Kühlnetz eines Kühlers in der Draufsicht zu Fig. 1;
- Fig. 3: Ähnlich Fig. 1, mit Verbindungsorganen;
- Fig. 4: Querschnitt mit Rückwand und Frontwand;
- Fig. 5: Ähnlich Fig. 4, mit einer anderen Rückwand

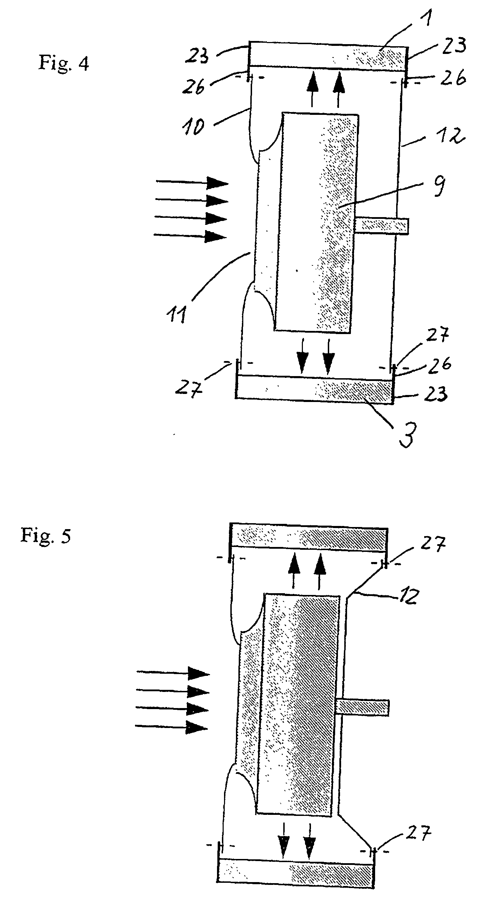

Die kastenförmige Kühlanlage aus den Fig. 1 und 3 besteht aus vier Kühlern 1 - 4, wobei jeder Kühler 1 - 4 eine Kastenseite bildet. In der Fig. 1 wurde zwischen den korrelierenden Flächen 13 ein Abstand vorgesehen, lediglich um zu zeigen, wie die Kühler 1 - 4 der gesamten Kühlanlage zusammengefügt werden, was also so geschieht, daß die Flächen 13 der Sammelkästen 7; 8 aneinander anliegen und luftdicht abschließen. Die Kühlanlage des Ausführungsbeispiels ist für schwere Lastkraftwagen vorgesehen.
In den genannten Figuren besitzt der obenliegende Kühler 1 eine größere Kühlnetztiefe 21 als die anderen Kühler 2 - 4 . Dieser Kühler 1 ist beispielsweise als Ladeluftkühler vorgesehen. Die anderen Kühler 2 - 4 sind Wasserküler, Kondensator, Ölkühler oder andere für den Betrieb von Lastkraftwagen notwendige Kühler. In manchen Fällen können auch mehrere Wasserkühler erforderlich sein. Die Kühler 2 - 4 weisen in diesem Ausführungsbeispiel bezüglich ihrer äußeren Gestaltung Identität auf, wodurch Fertigungskosten gesenkt werden können.
Der Sammelkasten 7 des Kühlers 1 ist im Querschnitt etwa trapezförmig ausgebildet. Die Schräge 28 (Fig. 1) bildet die kurze Seite der Fläche 13, gemeinsam mit der Hypotenuse des etwa dreieckförmigen Querschnitts des Sammelkastens 8.
Die Fläche 13 erstreckt sich über die gesamte Länge der Sammelkästen 7 und 8, senkrecht zur Zeichnungsebene, und besitzt in dem im Bild oberen Kantenbereich 6 einen Winkel 16 von 48 ° zur Vertikalachse 15. Zu einer gedachten horizontalen Linie beträgt der Winkel 16 entsprechend 42 °. Im unteren Kantenbereich 6 beträgt der entsprechende Winkel 45 °. Im Anwendungsfall der gezeigten Figuren 1 und 3 ist die Querschnittsfläche der Kühlanlage leicht trapezförmig, weil die Länge des unteren Kühlers 3 kürzer ist, als die Länge des oberen Kühlers 1. Durch diese Maßnahme und weiteren vielfältigen Querschnittsformen, in Verbindung mit unterschiedlichen Kühlnetztiefen 21, kann die Kühlanlage ohne Leistungseinbußen geschickt an den bereitgestellten Bauraum im Kraftfahrzeug angepaßt werden. Davon ausgehend kann von einem großen Variantenreichtum bei der Auslegung der Kühlanlage gesprochen werden, der samt und sonders zum Schutzumfang vorliegender Anmeldung gehören soll. Insbesondere deshalb können die angegebenen Winkel 16 an den Flächen 13 hinsichtlich ihrer Größe nur als bevorzugt angesehen werden.
Die Fig. 2 zeigt das Kühlnetz 5 des Kühlers 1 mit dem vorderen und hinteren Seitenteil 23, wie es in der Draufsicht von Fig. 1 zu erkennen ist. Das Kühlnetz 5 selbst wurde lediglich in einem kleinen Ausschnitt zeichnerisch dargestellt. Es besteht aus einer Vielzahl von Flachrohren 24 und dazwischen angeordneten Wellrippen 25, wie aus dem genannten Ausschnitt hervorgeht. Links und rechts des Kühlnetzes wurden die zugehörigen Rohrböden 22 der Kühler 2 und 4 gezeichnet. Daraus ist entnehmbar, daß mehrere Reihen Flachrohre 24 vorgesehen werden, wobei es darauf nicht weiter ankommt, weil z.B. auch Mehrkammerrohre oder dergleichen eingesetzt werden könnten.
Die Variante aus Fig. 3 gestattet eine Ausführungsform, bei der insbesondere die Rückwand 12 nicht so stabil ausgebildet werden muß, wie diejenige aus der beschriebenen Variante in Fig. 1, was weiter unten, im Zusammenhang mit den Fig. 4 und 5, näher beschrieben wird. In den Kantenbereichen 6 sind zwischen den korrelierenden Flächen 13 Verbinder 18 angeordnet worden, die die kastenförmige Anordnung fest zusammenhalten. In diesem Ausführungsbeispiel sind ebenfalls Verschlüsse 20 vorgesehen, die außen, an der Wand 19 der Sammelkästen 7 und 8 angeordnet sind und die Fläche 13 am Umfang übergreifen, um am benachbarten Sammelkasten 7 oder 8 die Verbindung zu gewährleisten. Es sei darauf hingewiesen, daß die Verbinder 18, die Verschlüsse 20 und auch die nicht gezeigten ineinandergreifenden Vorsprünge (Vorsprünge an Flächen mit z. B. schwalbenschwanzartigen Führungen, die zum Zweck der Verbindung ineinandergreifen sind allgemein bekannt) an den Flächen 13 nur beispielsweise zu verstehen sind. Alle diese Verbindungselemente könnten bei einem anderen konkreten Anwendungsfall jeweils einzeln oder auch gemeinsam zur Benutzung vorgesehen sein. Die Frage - ob - und wenn ja - welche Verbindungselemente zur Anwendung kommen sollen, ist von den Einsatzbedingungen, (Einbauraum, statische und dynamische Festigkeitsforderungen etc.) sowie von Kundenwünschen und Kostenfaktoren abhängig.

Die Fig. 1 und 3 zeigen außerdem den nach innen weisenden Überstand 26 der Seitenteile 23. Bei diesem Überstand 26 handelt es sich um einen relativ schmalen, umlaufenden Rand. Es sei jedoch betont, daß es nicht darauf ankommt, wie der Überstand 26 im Detail ausgebildet ist. In anderen nicht gezeigten Ausführungen handelt es sich bei dem Überstand 26 um einzelne, nach innen weisende Vorsprünge der Seitenteile 23. Der Überstand 26 muß so ausgebildet sein, daß er in der Lage ist, die Rückwand 12 und/oder auch die Frontwand 10 abzustützen, die während des Betriebes der Kühlanlage unter einem gewissen Druck stehen und die deshalb ringsherum (im Ausführungsbeispiel) auf dem Überstand 26 aufliegen, wodurch ein wirkungsvoller Beitrag zur einfachen Befestigung der Rückwand 12 und der Frontwand 10 sowie zur Stabilität der gesamten Kühlanlagegeleistet wird.
Die Fig. 4 und 5 zeigen den zuvor geschilderten Sachverhalt in einem schematisierten Querschnitt durch die Kühlanlage. Der Überstand 26 an den Seitenteilen 23 bildet am vorderen Ende der Kühlanlage eine Anlage für die Frontwand 10. Am hinteren Ende ist eine identische Ausbildung zur Anlage der Rückwand 12 vorgesehen. Die Befestigung der Rückwand 12 und der Frontwand 10 kann an diesem Überstand 26 oder/und durch nicht gezeigte Verbindungselemente erfolgen. Werden die in Fig. 3 gezeigten Verbindungselemente 17, 18, oder 20 vorgesehen, können die Wände mit geringeren Festigkeitseigenschaften ausgebildet werden. Außerdem kann die Befestigung nur an dem Überstand 26 mittels Verschraubung 27 oder dergleichen ausreichend sein.
Aus diesen Figuren ist besser zu erkennen, was oben bereits kurz angerissen wurde, daß nämlich in dem inneren Raum der Kühlanlage ein Staudruck entsteht, der durch die Anlage der Wände 10 und 12 an dem Überstand 26 gut aufgenommen werden kann. Da die Seitenteile 23 gewöhnlich am Kühlnetz 5 fest angelötet sind, besitzen sie die notwendige Stabilität, so daß durch die Anlage der Wände 10, 12 an dem Überstand 26 der Seitenteile 23 eine kompakte und sehr stabile Kühlanlage zur Verfügung gestellt wird. Der Radialventilator 9 wurde schematisch im inneren Raum der Kühlanlage eingezeichnet. Die Kühlluft tritt gemäß den Pfeilen durch die Ansaugöffnung 11 in die Kühlanlage ein und wird radial umgelenkt, um die Kühlnetze 5 der Kühler 1 - 4 zu durchströmen. Gemäß Fig. 5 ist die Rückwand 12, im Unterschied zur Fig. 4, nach innen eingezogen, wodurch zusätzlicher Bauraum gewonnen wird.

## Patentansprüche

1. Kühlanlage für Lastkraftwagen, mit mehreren einzelnen jeweils ein Kühlnetz (5) und zwei Seitenteile (23) aufweisenden Kühlern (1 - 4), wie beispielsweise Ladeluftkühler und Wasserkühler, die kastenförmig derart zusammengefügt sind, daß jeder Kantenbereich (6) der kastenförmigen Anordnung durch einen Sammelkasten (7) des einen Kühlers und einen Sammelkasten (8) des nächsten Kühlers gebildet ist, wobei die Kühlanlage einen Radialventilator (9) innerhalb der kastenförmigen Anordnung aufweist, der Frischluft über eine in der Frontwand (10) vorgesehene Ansaugöffnung (11) ansaugt und als Kühlluft durch die Kühler der kastenförmigen Anordnung hindurchbläst, die durch eine Rückwand (12) verschlossen ist,
**dadurch gekennzeichnet,**
**daß** die Wände der Sammelkästen (7;8) der Kühler (1- 4) über ihre Länge mit korrelierenden Flächen (13) ausgebildet sind, die einen weitgehend luftdichten Abschluß zwischen den Flächen (13) im Kantenbereich (6) darstellen und die einen solchen Winkel (16) zur Horizontalen bzw. Vertikalen aufweisen, daß beim Zusammenfügen die innenliegenden Kanten (14) der Kühlnetze (5) der zugehörigen Kühler in ihrem Abstand (a) zueinander minimiert sind,
**daß** wenigstens ein Kühler (1) der Kühlanlage eine größere Tiefe (21) seines Kühinetzes (5) aufweist als die anderen Kühler (2, 3, 4),
und **daß** die Seitenteile (23) der Kühler (1- 4) nach innen über das Kühlnetz (5) überstehen, wobei die Rückwand (12) und/oder die Frontwand (10) an diesem Überstand (26) befestigt sind.

2. Kühlanlage nach Anspruch 1, **dadurch gekennzeichnet, daß** die Flächen (13) der Sammelkästen (7;8) in jedem Kantenbereich (6) mit einem Winkel (16) zwischen 40° und 50° zur Horizontalen bzw. Vertikalen angeordnet sind.

3. Kühlanlage nach Anspruch 2, **dadurch gekennzeichnet, daß** der Winkel (16) zwischen 43° und 47 ° beträgt.

4. Kühlanlage nach Anspruch 1, **dadurch gekennzeichnet, daß** die Flächen (13) an den Sammelkästen (7;8) eben sind und direkt aneinanderliegen, wobei die Kühler (1 - 4) der kastenförmigen Anordnung mittels der mit Stabilitätseigenschaften ausgebildeten Rückwand (12) und der Frontwand (10) zusammengehalten und fest verbunden sind und daß die Anordnung im Bereich der Rückwand (12) luftdicht verschlossen ist.

5. Kühlanlage nach einem der Ansprüche 1 bis 4, **dadurch gekennzeichnet, daß** sich die Kanten (14) der Kühlnetze (5) der den Kantenbereich (6) bildenden Kühler berühren oder einen Abstand (a) zueinander aufweisen der vorzugsweise nicht größer als 30 mm ist.

6. Kühlanlage nach einem der Ansprüche 1 bis 3 oder 5, **dadurch gekennzeichnet, daß** ein oder mehrere Verbindungsorgane (17, 18, 20) angeordnet sind.

7. Kühlanlage nach Anspruch 6, **dadurch gekennzeichnet, daß** die Verbindungsorgane aus zwischen den Flächen (13) positionierten Verbindem (18) und/oder aus an den Flächen (13) angeordneten Vorsprüngen (17), die beim Zusammenfügen der Flächen (13) ineinandergreifen und/oder aus an den Wänden (19) der Sammelkästen (7;8) angeordneten Verschlüssen (20) bestehen, die außen, am Umfang, die korrelierenden Flächen (13) übergreifen und die Verbindung der Sammelkästen (7;8) gewährleisten.

8. Kühlanlage nach mindestens einem der vorstehenden Ansprüche, **dadurch gekennzeichnet, daß** der Querschnitt der Sammelkästen (7;8) etwa rechtwinklige Dreiecksform aufweist, wobei die Hypotenuse die kurze Seite der einen besagten Fläche (13) darstellt oder daß der Querschnitt der Sammelkästen (7;8) etwa trapezähnlich gestaltet ist, wobei die besagte kurze Seite der einen Fläche (13) durch die Schräge (28) der trapezähnlichen Gestalt gebildet ist.

9. Kühlanlage, insbesondere nach Anspruch 8, **dadurch gekennzeichnet, daß** mindestens ein Kantenbereich (6) durch einen im Querschnitt etwa dreieckförmigen und einen im Querschnitt etwa trapezförmigen Sammelkasten (7;8) gebildet ist.

10. Kühlanlage nach einem der vorstehenden Ansprüche 1 bis 9, **dadurch gekennzeichnet, daß** mindestens ein Kantenbereich (6) durch zwei im Querschnitt etwa dreieckförmige Sammelkästen (8) gebildet ist.

11. Kühlanlage nach einem der vorstehenden Ansprüche, **dadurch gekennzeichnet, daß** ein parallel zur Rückwand (12) der Kühlanlage gedachter Querschnitt durch die Kühlanlage vorzugsweise quadratisch, rechteckig oder trapezförmig ausgebildet ist oder eine andere, unregelmäßige Seitenlängen der Kastenseiten aufweisende, jedoch kastenförmige Ausbildung besitzt.

## Claims

1. Cooling system for heavy-goods vehicles, with a plurality of individual coolers (1 - 4), such as, for example, charge-air coolers and radiators, which each have a cooling network (5) and two side parts (23) and are assembled in a box-shaped manner in such a way that each edge region (6) of the box-shaped arrangement is formed by a header (7) of one cooler and by a header (8) of the next cooler, the cooling system having, within the box-shaped arrangement, a radial fan (9) which sucks in fresh air via an intake orifice (11) provided in a front wall (10) and blows it as cooling air through the coolers of the box-shaped arrangement which is closed by means of a rear wall (12), **characterized in that** the walls of the headers (7; 8) of the coolers (1 - 4) are produced, over their length, with correlating surfaces (13) which constitute a largely air-tight closure between the surfaces (13) in the edge region (6) and which have an angle (16) to the horizontal or vertical such that, during assembly, the distance (a) between the inner edges (14) of the cooling networks (5) of the associated coolers is minimized, **in that** at least one cooler (1) of the cooling system has a greater depth (21) of its cooling network (5) than the other coolers (2, 3, 4), and **in that** the side parts (23) of the coolers (1 - 4) project inwards beyond the cooling network (5), the rear wall (12) and/or the front wall (10) being fastened to this projection (26).

2. Cooling system according to Claim 1, **characterized in that** the surfaces (13) of the headers (7; 8) in each edge region (6) are arranged at an angle (16) of between 40° and 50° to the horizontal or vertical.

3. Cooling system according to Claim 2, **characterized in that** the angle (16) is between 43° and 47°.

4. Cooling system according to Claim 1, **characterized in that** the surfaces (13) at the headers (7; 8) are planar and bear directly against one another, the coolers (1 - 4) of the box-shaped arrangement being held together and firmly connected by means of the rear wall (12) and the front wall (10) which are designed with stability properties, and **in that** the arrangement is closed in an air-tight manner in the region of the rear wall (12).

5. Cooling system according to one of Claims 1 to 4, **characterized in that** the edges (14) of the cooling networks (5) of the coolers forming the edge region (6) are in contact with one another or are at a distance (a) from one another which is preferably no greater than 30 mm.

6. Cooling system according to one of Claims 1 to 3 or 5, **characterized in that** one or more connecting members (17, 18, 20) are arranged.

7. Cooling system according to Claim 6, **characterized in that** the connecting members consist of connectors (18) positioned between the surfaces (13) and/or of projections (17) which are arranged on the surfaces (13) and engage one into the other during the assembly of the surfaces (13) and/or of fastenings (20) which are arranged on the walls (19) of the headers (7; 8) and which on the outside engage over the correlating surfaces (13) on the circumference and ensure the connecting of the headers (7; 8).

8. Cooling system according to at least one of the preceding claims, **characterized in that** the cross section of the headers (7; 8) has approximately the shape of a right-angled triangle, the hypotenuse constituting the short side of the one said surface (13) or **in that** the cross section of the headers (7; 8) has an approximately trapezium-like configuration, the said short side of one surface (13) being formed by the slope (28) of the trapezium-like configuration.

9. Cooling system particularly according to Claim 8, **characterized in that** at least one edge region (6) is formed by a header (8) of approximately triangular cross section and by a header (7; 8) of approximately trapezoidal cross section.

10. Cooling system according to one of the preceding Claims 1 to 9, **characterized in that** at least one edge region (6) is formed by two headers (8) of approximately triangular cross section.

11. Cooling system according to one of the preceding claims, **characterized in that** a cross section through the cooling system, imagined as being parallel to the rear wall (12) of the cooling system, is of preferably square, rectangular or trapezoidal design or is of another design which has irregular side lengths of the box sides, but is box-shaped.

## Revendications

1. Installation de refroidissement pour camions avec plusieurs refroidisseurs individuels (1 - 4) par exemple un refroidisseur d'air de suralimentation et un refroidisseur d'eau, qui présentent chacun un réseau de refroidissement (5) et deux parties latérales (23), qui sont assemblés en forme de caisson de telle sorte que chaque région d'arête (6) de l'agencement en forme de caisson soit formée par un caisson de collecte (7) de l'un des refroidisseurs et un caisson de collecte (8) du refroidisseur suivant, l'installation de refroidissement présentant à l'intérieur de l'agencement en forme de caisson un ventilateur radial (9) qui aspire de l'air frais par une ouverture d'aspiration (11) prévue dans la paroi avant (10) et qui le refoule comme air de refroidissement à travers les refroidisseurs de l'agencement en forme de caisson qui est fermé par une paroi arrière (12),
**caractérisée en ce que**
les parois des caissons de collecte (7; 8) des refroidisseurs (1 - 4) sont configurées sur leur longueur avec des surfaces en correspondance (13) qui constituent une fermeture largement étanche à l'air entre les surfaces (13) dans la région des arêtes (6) et qui présentent par rapport à l'horizontale ou à la verticale un angle (16) tel que lors de l'assemblage, l'écart mutuel (a) entre les arêtes intérieures (14) des réseaux de refroidissement (5) des refroidisseurs associés soit minimisé,
**en ce qu'**au moins un refroidisseur (1) de l'installation de refroidissement présente un réseau de refroidissement (5) d'une profondeur (21) plus grande que ceux des autres refroidisseurs (2, 3, 4),
et **en ce que** les parties latérales (23) des refroidisseurs (1 - 4) débordent vers l'intérieur au-dessus du réseau de refroidissement (5), la paroi arrière (12) et/ou la paroi avant (10) étant fixées sur ce débord (26).

2. Installation de refroidissement selon la revendication 1, **caractérisée en ce que** dans la région de chaque arête (6), les surfaces (13) des caissons de collecte (7; 8) sont disposées à un angle (16) compris entre 40° et 50° par rapport à l'horizontale ou à la verticale.

3. Installation de refroidissement selon la revendication 2, **caractérisée en ce que** l'angle (16) est compris entre 43° et 47°.

4. Installation de refroidissement selon la revendication 1, **caractérisée en ce que** les surfaces (13) des caissons de collecte (7; 8) sont planes et reposent directement l'une contre l'autre, les refroidisseurs (1 - 4) de l'agencement en forme de caisson étant maintenus ensemble et reliés fixement au moyen de la paroi arrière (12) et de la paroi avant (10) qui sont configurées avec des propriétés de stabilité, et **en ce que** dans la région de la paroi arrière (12), l'agencement est fermé de manière étanche à l'air.

5. Installation de refroidissement selon l'une des revendications 1 à 4, **caractérisée en ce que** les arêtes (14) des réseaux de refroidissement (5) des refroidisseurs qui forment la région des arêtes (6) sont en contact ou présentent l'une par rapport à l'autre une distance (a) qui n'est de préférence pas supérieure à 30 mm.

6. Installation de refroidissement selon l'une des revendications 1 à 3 ou 5, **caractérisée en ce qu'**un ou plusieurs organes de liaison (17, 18, 20) sont installés.

7. Installation de refroidissement selon la revendication 6, **caractérisée en ce que** les organes de liaison sont constitués d'éléments de liaison (18) qui sont disposés entre les surfaces (13) et/ou de saillies (17) qui sont disposées sur les surfaces (13) et qui s'engagent les unes dans les autres lors de l'assemblage des surfaces (13) et/ou de fermetures (20) qui sont disposées sur les parois (19) des caissons de collecte (7; 8) qui, à l'extérieur, à la périphérie, chevauchent les surfaces en correspondance (13) et assurent la liaison des caissons de collecte (7; 8).

8. Installation de refroidissement selon au moins une des revendications précédentes, **caractérisée en ce que** la section transversale des caissons de collecte (7; 8) présente sensiblement la forme d'un triangle rectangle, l'hypoténuse formant le court côté de l'une desdites surfaces (13) ou **en ce que** la section transversale des caissons de collecte (7; 8) est configurée sensiblement en forme de trapèze, ledit court côté de l'une des surfaces (13) étant formé par le côté oblique (28) de la forme de type trapézoïdal.

9. Installation de refroidissement, en particulier selon la revendication 8, **caractérisée en ce qu'**au moins une région d'arête (6) est formée par un caisson de collecte (7; 8) de section transversale sensiblement triangulaire et par un caisson de collecte (7; 8) de section transversale sensiblement trapézoïdale.

10. Installation de refroidissement selon l'une des revendications 1 à 9 qui précèdent, **caractérisée en ce qu'**au moins une région d'arête (6) est formée par deux caissons de collecte (8) de section transversale sensiblement triangulaire.

11. Installation de refroidissement selon l'une des revendications précédentes, **caractérisée en ce qu'**une coupe imaginaire à travers l'installation de refroidissement, parallèle à la paroi arrière (12) de l'installation de refroidissement, présente de préférence une configuration carrée, rectangulaire ou trapézoïdale ou possède une autre configuration qui présente des longueurs latérales irrégulières des côtés du caisson, mais qui a cependant la forme d'un caisson.
